# EUROPÄISCHE PATENTSCHRIFT

(11) **EP 1 283 678 B1**
(45) Veröffentlichungstag und Bekanntmachung des Hinweises auf die Patenterteilung: **29.06.2005**
(21) Anmeldenummer: 01953104.5
(22) Anmeldetag: 18.05.2001
(51) Int. Cl.: A21D 8/04, A21D 10/00

(54) **LAGERSTABILER VORTEIG, EIN VERFAHREN ZU SEINER HERSTELLLUNG UND SEINE VERWENDUNG**
STORABLE DOUGH PRECURSOR, METHOD FOR PRODUCTION AND USE THEREOF
PRE-PATE DE BONNE CONSERVATION, SON PROCEDE DE PRODUCTION ET SON UTILISATION

(30) Priorität: 24.05.2000 DE 10025654
(43) Veröffentlichungstag der Anmeldung: 19.02.2003
(73) Patentinhaber: CSM Nederland B.V., 1112 XE Diemen (NL)
(72) Erfinder: ENGELHARDT, Ulrich, 55450 Langenlonsheim (DE); ROHSCHENKEL, Christoph, 55218 Ingelheim (DE); WINTER, Manfred, 55218 Ingelheim (DE)
(74) Vertreter: van Westenbrugge, Andries
(86) Internationale Anmeldenummer: PCT/DE2001/001919
(87) Internationale Veröffentlichungsnummer: WO 2001/089307

(56) Entgegenhaltungen:
- DE-A- 3 911 937
- US-A- 3 845 221
- US-A- 5 500 231
- US-A- 5 718 938

## Beschreibung

Die Erfindung betrifft einen insbesondere zur gewerblichen und industriellen Verwendung geeigneten feuchten Vorteig, der ohne Geschmacksverlust lagerfähig ist, ein Verfahren zu dessen Herstellung sowie dessen Verwendung.

Üblicherweise werden zur Lockerung von Teigen Triebmittel eingesetzt, welche beim Backen das Volumen des Teiges bzw. der damit hergestellten Backware erhöhen. Dies kann sowohl durch biologische Lockerungsmittel, chemische Lockerungsmittel wie beispielsweise Ammoniumhydrogenkarbonat oder auch durch physikalische Lockerung wie beispielsweise durch Eintrag von Luft- oder Gasblasen erreicht werden. Ein weit verbreitetes biologisches Lockerungsmittel ist Hefe. Da gute Hefe früher relativ teuer und auch nicht ohne weiteres transportierbar und lagerfähig war, wurde zur Einsparung der verwendeten Hefemenge ein Vorteig angefertigt und die Bäckerhefe darin vermehrt. Erst danach wurde dieser Vorteig mit den restlichen Teigzutaten vermengt. Da heute Bäckerhefe relativ billig und in großen Mengen zu erhalten ist, wird zur Einsparung von Produktionskosten bei vielen Backverfahren kein Vorteig mehr angefertigt oder dieser wird nur noch kurz gehen gelassen bzw. fermentiert.

Es hat sich jedoch gezeigt, dass beim sogenannten "Gehen" bzw. "Fermentieren" des Vorteigs eine Vielzahl von Geschmacks- und Aromastoffen entwickelt werden, deren vollständige Ausbildung jedoch etliche Zeit in Anspruch nimmt. Da nun zur Verringerung der Produktionskosten das Gehen, also eine langandauernde Fermentierung des Vorteigs weggelassen wird, können sich diese für viele Backerzeugnisse typischen geschmacksbildenden Stoffe nicht mehr entwickeln.

Ein längeres Lagern von fertigen Vorteigen war bislang nicht ohne weiteres möglich. Derartige Vorteige sind nämlich feucht, weshalb bei ihrer Lagerung die biologischen und biochemischen Reaktionen fortlaufen, wodurch der Vorteig verdirbt bzw. der Geschmack umkippt. Selbst wenn die vorhandenen lebenden Mikroorganismen abgetötet werden und der bioaktive Teig konserviert wird, so laufen aufgrund der noch vorliegenden backaktiven Enzyme die chemischen Reaktionen weiter, so dass auch dann der Teig schlecht wird.

Versuche einen derartigen backaktiven Vorteig durch Erwärmen zu trocknen, führt zu einem Verlust und zur Zerstörung der backaktiven und geschmacksbildenden Enzyme. Eine Gefriertrocknung scheidet aus Kostengründen aus. Darüber hinaus werden auch hier die bereits im Vorteig entstandenen Triebgase entfernt.

In der EP-A-0,504,970 wird ein Verfahren zur Haltbarmachung von Vorteigen beschrieben, wonach diese nach der Fermentierung eingefroren und ggf. gemahlen bzw. ggf. getrocknet werden.

Ein Nachteil dieser Verfahren ist der hohe Energieverbrauch, der notwendig ist, um die Flüssigkeit dem Vorteig zu entziehen, damit dieser lagerstabil wird. Diese Verfahren sind daher mit erhöhten Kosten verbunden. Außerdem führen Versuche, einen derartigen backaktiven Vorteig durch Erwärmung zu trocknen, zu einem Verlust und zur Zerstörung der backaktiven und geschmacksbildenden Enzyme.

DE-A-3911 937 offenbart ein zweistüfiges Verfahren zur Herstellung eines Weizenverteiges.

Die Erfindung hat zum Ziel, einen gebrauchsfertigen Vorteig für Backwaren bereitzustellen, der eine ausreichende backaktive Leistung aufweist; der für das spätere fertige Backerzeugnis eine ausreichende Menge an Aromastoffen oder deren Vorläufern enthält; der darüber hinaus ein hervorragendes Gashaltevermögen aufweist; und der lagerstabil ist.

Dieses Ziel läßt sich mit den in den Ansprüchen definierten Merkmalen erreichen.

Es wurde nämlich erfindungsgemäß gefunden, dass sich die zuvor genannten Ziele erreichen lassen, wenn der Vorteig mindestens 10 Gew.-% Natriumchlorid enthält. Übliche Vorteige weisen maximal 2 % Natriumchlorid auf. Vorzugsweise enthält der Vorteig mindestens 15 Gew.-% Natriumchlorid. In einer besonders bevorzugten Ausführungsform enthält der Vorteig mindestens 20 Gew.-% Natriumchlorid und ist annähernd an Natriumchlorid gesättigt. Es hat sich als zweckmäßig erwiesen, dass dem erfindungsgemäßen Vorteig bereits die gesamte später benötigte Natriumchloridmenge (d. h. 100%) zugesetzt wird, so dass der Bäcker lediglich noch Mehl und Wasser sowie gegebenenfalls Hefe zusetzen muss. In manchen Fällen hat es sich auch als zweckmäßig erwiesen, so viel Natriumchlorid zuzusetzen, dass der Bäcker sein gewohntes Verhältnis von Mehl, Natriumchlorid und Wasser sowie gegebenenfalls Hefe zur Herstellung des fertigen Backteiges verwenden kann. Dies hat insbesondere im gewerblichen Bereich den Vorteil, dass sämtliche Backrezepte und Computer-gesteuerte Backprozesse nicht weiter geändert werden müssen. In solchen Fällen hat es sich als zweckmäßig erwiesen, wenn der Vorteig mindestens 50 % der später im fertigen Teig benötigten Natriumchloridmenge bereits enthält.

Es wurde erfindungsgemäß gefunden, dass sich überraschenderweise ein Vorteig lange lagern läßt, wenn dieser die erfindungsgemäß notwendige Menge Natriumchlorid enthält, obwohl er noch lebefähige Hefen sowie andere geschmacksbildende Mikroorganismen enthalten kann. Ein derartiger Teig muss somit nicht weiter sterilisiert werden.

Obwohl der Vorteig auch bei Raumtemperatur über etliche Zeit lagerfähig ist, so wird er doch vorzugsweise unter Kühlung gelagert. Zweckmäßige Lagertemperaturen liegen unterhalb von 15°C, vorzugsweise unterhalb 10°C, wobei Temperaturen unterhalb 8°C besonders bevorzugt sind. Bevorzugte Lagertemperaturen sind übliche Kühlschranktemperaturen, d.h. Temperaturen zwischen 3°C und 8°C. Wird bei 0°C ± 2°C gelagert, so bleibt der erfindungsgemäße Vorteig extrem lange verwendbar. Übliche Lagertemperaturen liegen somit zwischen -2 und 8°C.

Bei der Herstellung des erfindungsgemäßen Vorteigs kann in der einfachsten Form derart vorgegangen werden, dass die Grundzutaten Mehl, Wasser, Natriumchlorid und Hefe miteinander vermischt werden und unter Kneten ein Teig gebildet wird. Vorzugsweise wird solange geknetet bis eine ausreichende Menge an Kleber entstanden ist. Dies geschieht üblicherweise durch intensives Kneten, insbesondere schonendes Kneten, wodurch in den Kleberproteinen ein dreidimensionales Schwefelbrücken-enthaltendes Netzwerk gebildet wird.

Vorzugsweise wird das erfindungsgemäße Verfahren jedoch nicht einstufig sondern mindestens zweistufig durchgeführt, wobei in einem ersten Verfahrensschritt Mehl, Wasser, Hefe und gegebenenfalls Zucker, Ascorbinsäure, Enzyme und geschmacksbildende Mikroorganismen gemischt und miteinander wie zuvor beschrieben geknetet werden. Danach läßt man den Vorteig fermentieren. Erst nach der Fermentation wird in einem weiteren Verfahrensschritt die erfindungsgemäß notwendige Natriumchloridmenge in den Vorteig eingearbeitet. In Einzelfällen hat es sich bei diesem mehrstufigen Verfahren auch als zweckmäßig erwiesen, bereits beim Fermentieren eine geringe 1,5 Gew.-% nicht übersteigende Natriumchloridmenge zuzusetzen, vorzugsweise jedoch nicht mehr als 0,5 Gew.-%.

Es hat sich nämlich gezeigt, dass mit dem erfindungsgemäß bevorzugten zweistufigen Verfahren die Ausbildung der Geschmacks- und Aromastoffe noch weiter verstärkt wird.

Nach dem Ende des Knetens wird der Vorteig fermentiert, d. h. der durch die Mikroorganismen verursachte Fermentationsprozess beginnt. Im Gärungs- bzw. Fermentationsprozess werden nicht nur die Triebgase entwickelt, die vom Mikroorganismus in den Vorteig freigesetzt werden, sondern auch eine Vielzahl von Geschmacks- und Aromastoffen bzw. deren Vorläufer. Aus diesem Grund wird dieser Vorgang auch als Reifung bezeichnet. Durch Zersetzung von im Mehl enthaltenen Polysacchariden, insbesondere Stärken und Proteinen, werden Zucker, organische Säuren wie Milch- und Essigsäure etc., Aminosäuren wie Alanin, Valin, Leucin, Isoleucin, Methionin, Phenylalanin und Alkohole gebildet. Viele dieser Substanzen, insbesondere die Zucker und Aminosäuren, reagieren dann beim Backen zu typischen backspezifischen Geschmacks- und Aromakomponenten. Üblicherweise wird die Fermentierung bei Temperaturen zwischen 10°C und 40°C, insbesondere zwischen Raumtemperatur und 38°C, vorzugsweise bis 30°C, in einem Zeitraum zwischen 10 Minuten und 48 Stunden durchgeführt. Vorzugsweise beträgt die Fermentationszeit 12 bis 24 Stunden, wobei 18 bis 24 Stunden bevorzugt sind.

Durch Erhöhung und Erniedrigung der Temperatur sowie Verkürzen und Verlängern der Fermentationszeit, lassen sich die Anzahl und Menge der Geschmackskomponenten sowie deren Verhältnis untereinander in gewünschter Weise steuern.

Nach dem Fermentieren oder Reifen wird der fertige Vorteig in entsprechende Container abgepackt, abgekühlt und bis zu seiner Verwendung bei Temperaturen um den Gefrierpunkt gelagert.

In einer bevorzugten Ausführungsform wird dem Vorteig Fett zugesetzt. Es wurde gefunden, dass ein derartiger Fettzusatz den gesamten Vorteig geschmeidiger macht, wobei die Klebereigenschaften beibehalten werden. Vorzugsweise enthält der Vorteig nicht mehr als 20 Gew.-%, insbesondere nicht mehr als 15 Gew.-% Fettanteil und nicht weniger als 3 Gew.-%, insbesondere nicht weniger als 5 Gew.-%, wobei 9 mindestens 8 Gew.-% besonders bevorzugt ist. Erfindungsgemäß geeignete Fette sind Butter, Schweineschmalz, Gänseschmalz, Margarine, tierische und pflanzliche Öle und zum Teil gehärtete Fette, wie z.B. gehärtetes Palmfett, gehärtetes Seetierfett sowie Kombinationen aus diesen Fetten.

Zur Herstellung des erfindungsgemäßen Vorteiges wird üblicherweise eine Menge von Mehl zu Wasser von mindestens 1:1, vorzugsweise mindestens 2 Gewichtsteile Mehl pro Gewichtsteil Wasser verwendet. Derartige Teige sind fest und nicht pumpfähig.

Für das erfindungsgemäße Verfahren bzw. den Vorteig sind alle üblichen in der Backtechnik verwendbaren Hefen verwendbar, wie z. B. übliche Bäckerhefe. In einer besonders bevorzugten Ausführungsform werden dem Vorteig säurebildende Mikroorganismen, insbesondere säurebildende Bakterien, und zwar vorzugsweise milchsäurebildende Bakterien und/oder weitere Hefen wie z. B. Candida milleri und Saccharomyces Cerevisiae zugesetzt. Bevorzugte Lactobakterien sind Lactobazillus sanfranciscensis, Lactobazillus plantarum, Lactobazillus casei sowie Lactobazillus brevis ssp. lindneri. Weitere besonders bevorzugte Mikroorganismen sind Lactobazillus confusus sowie Lactobazillus pontis. Durch die Zugabe dieser Mikroorganismen wird nicht nur die Geschmacksausbildung während der Fermentation im Vorteig synergistisch ergänzt, sondern darüber hinaus auch die Haltbarkeit des Vorteiges verstärkt. Auch diese Bakterien verstärken in synergistischer Weise die Fermentationsleistung der Hefe, insbesondere die Triebwirkung, durch die sogenannte Schutz- und/oder Reizwirkung, so dass das Entstehen von im Teig gelöstem CO₂ gefördert wird. Im Gegensatz zu kommerziellen Vorteigen des Standes der Technik, wie demjenigen des EP-A-0,504,970, enthält der erfindungsgemäße Vorteig noch fein verteiltes Triebgas.

Des weiteren hat es sich als zweckmäßig erwiesen zur besseren Haltbarkeit dem Teig Polysaccharide aus β-1,4 glycosidisch verknüpften D-Mannopyranose-Einheiten mit einer α-1,6 verknüpften D-Galactopyranose in der Seitenkette als Verdickungsmittel zuzumischen. Derartige Polysaccharide sind beispielsweise in Guarmehl enthalten. Guar selbst wird als Strukturbildner sowie als Stabilisator zugesetzt. Es weist zudem im fertigen Teig eine beträchtliche Gärverzögerung auf, was ebenfalls zur Stabilisierung des Vorteiges beiträgt. Auch zur Einstellung der Konsistenz insbesondere der Festigkeit des erfindungsgemäßen Vorteiges hat sich Guarmehl als geeignet erwiesen. Weitere geeignete Polysaccharid enthaltende Zutaten sind Alginate, Carrageenane, Carboxylmethylcellulose, Methylcellulose, Pektin, Xanthan und Hemicellulose, aber auch Weizenkleber, chemisch oder physikalisch modifizierte Stärken und Quellmehle.

Des weiteren hat es sich als zweckmäßig erwiesen, dem erfindungsgemäßen Vorteig übliche Backhilfsstoffe zuzusetzen, wie Emulgatoren, Oxidationsmittel, Reduktionsmittel, Enzyme, Fett und Puffer. Geeignete Emulgatoren sind Lecithin, hydroxyliertes Lecithin, Mono- und Diglyceride sowie deren Derivate, wie Propylenglycolmono- und Diglyceride, sowie ethoxylierte Mono- und Diglyceride, Datems, Lactems, Citrems, Acetems, SSL/CSL, Polysorbat 60, Calcium Steaoryl-2-Lactylat. Geeignete Oxidationsmittel sind Kaliumbromat, Calciumbromat, Kaliumiodat und Calciumiodat sowie Azodicarbonamid und Calciumperoxid sowie die im Teig oxidativ wirkende Ascorbinsäure. Geeignete Reduktionsmittel sind beispielsweise L-Cystein. Geeignete Enzyme sind Amylasen und Proteasen, sowie Enzyme aus Malzsirup, Bromelain, Sojabohnenlipoxidase, Papain, welche die Gasbildung verstärken.

Üblicherweise weist der Vorteig einen pH von 3 bis 6, bevorzugterweise 3,5 bis 5 auf. Erfindungsgemäß hat es sich als zweckmäßig erwiesen innerhalb des zuvor genannten pH-Bereiches den Säuregrad so weit wie möglich zu erhöhen. Der maximale Säuregrad liegt bei 15, bevorzugt werden Säuregrade von 4-8.

Die Erfindung soll anhand der folgenden Beispiele näher erläutert werden.

### Beispiel 1

Es wurden 18,27 kg Weizenmehl Type 550 und 9,135 kg Wasser mit 2 g Hefe und 3,773 kg Zucker, sowie geringen Mengen a-Amylase (Mischung unterschiedlicher Quellen, insgesamt ca. 250 g) und 292 g Ascorbinsäure vermischt und schonend 5 bis 30 Minuten geknetet. Anschließend wurde der Teig bei 25°C 18-24 Stunden gehen gelassen bzw. fermentiert. Danach wurde in einer zweiten Stufe 16,012 kg Weizenmehl Type 550, 9,854 kg Wasser, 21,678 kg Natriumchlorid, 12,81 kg Schweineschmalz, 6,89 kg Malzextrakt, sowie 3,94 kg Guarkernmehl und 3,055 kg Lecithin unter vorsichtigem Kneten eingemischt. Der so erhaltene Vorteig wurde in einen Schlauch wurstförmig abgepackt und bei 2°C 6 Monate lang gelagert. Von Zeit zu Zeit wurden Proben entnommen und auf ihre Back-und Geschmackseigenschaften überprüft. Dabei zeigte sich dass die Probe keinerlei Geschmackseinbußen zeigte.

### Beispiel 2

In einem einstufigen Verfahren wurden 30,782 kg Mehl Type 550, 17,238 kg Wasser, 21,671 kg Natriumchlorid, 12,805 kg Schweineschmalz, 6,895 kg Malzextrakt, 3,037 kg Zucker, 20 g Hefe, 3,940 kg Guarkernmehl, 3,054 kg Lecithin, 210 g α-Amylase- Mischung, sowie 0,244 kg Ascorbinsäure zusammengemischt, geknetet und bei 35°C 20 Stunden fermentiert, wie zuvor beschrieben abgepackt und 6 Monate lang bei 2°C gelagert. Auch hier zeigten sich während der Lagerung keine Einbußen in Backaktivität und Geschmack.

Die Erfindung betrifft auch die Verwendung der Vorteige zur Herstellung von Backwaren. Vorzugsweise wird der erfindungsgemäße Teig zur Herstellung von Brot, Kleingebäck, hefegelockerter feiner Backwaren verwendet.

Dabei wird der Vorteig lediglich mit Mehl und Wasser sowie ggf. noch fehlendem Natriumchlorid vermischt und zwar vorzugsweise mittels Kneten und unter normalen Bedingungen gebacken, wobei die Backzeit geringfügig, üblicherweise 12 Min. kürzer ist als die sonst übliche Backzeit.

## Patentansprüche

1. Verfahren zur Herstellung eines feuchten, lagerfähigen, backaktiven Vorteigs für aromaintensive Backwaren durch Kneten einer Mischung von Mehl, Wasser und Hefe die mindestens 1 Gewichtsteil Mehl pro Gewichtsteil Wasser, sowie gegebenenfalls weiterer Zutaten enthält und durch Fermentieren bei einer Temperatur von 5-45°C, bis sich das Volumen des Teiges um mindestens 10 Vol.-% erhöht hat, **dadurch gekennzeichnet, dass** man dem Vorteig soviel Natriumchlorid zusetzt, dass dieser mindestens 10 Gew.-% Natriumchlorid enthält.

2. Verfahren nach Anspruch 1, **dadurch gekennzeichnet, dass** man das NaCl nach dem Fermentieren in einer zweiten Verfahrensstufe zusetzt.

3. Verfahren nach Anspruch 1 oder 2, **dadurch gekennzeichnet, dass** man dem Vorteig mindestens 15 Gew.-% Natriumchlorid zusetzt.

4. Verfahren nach einem der vorhergehenden Ansprüche **dadurch gekennzeichnet, dass** man dem Vorteig mindestens 50 Gew.-% der NaCl-Menge zugibt, die für die fertige Backware benötigt wird.

5. Verfahren nach einem der vorhergehenden Ansprüche **dadurch gekennzeichnet, dass** man säurebildende Mikroorganismen zusetzt.

6. Verfahren nach einem der vorhergehenden Ansprüche **dadurch gekennzeichnet, dass** man maximal drei Gewichteteile Mehl pro Gewichtsteil Wasser verwendet.

7. Verfahren nach einem der vorhergehenden Ansprüche **dadurch gekennzeichnet, dass** man mindestens ein Fett zusetzt.

8. Verfahren nach einem der vorhergehenden Ansprüche **dadurch gekennzeichnet, dass** man mindestens einen Emulgator zusetzt.

9. Verfahren nach einem der vorhergehenden Ansprüche **dadurch gekennzeichnet, dass** man Polysaccharide und/oder Proteine zusetzt.

10. Lagerfähiger, feuchter, backaktiver, gekneteter Vorteig enthaltend Mehl, Wasser und Hefe, **dadurch gekennzeichnet, dass** der Gewichtsanteil des Mehles gleich oder größer dem Gewichtsanteil des Wassers ist und dass der Teig mindestens 10 Gew.-% Natriumchlorid ersthält.

11. Verwendung eines nach dem Verfahren der Ansprüche 1-9 erhaltenen Vorteigs oder des Vorteigs von Anspruch 10 zur Herstellung von Backwaren.

## Claims

1. Method for manufacturing a moist, storable, bake-active pre-dough for aroma-intensive bakery goods by kneading a mixture of flour, water and yeast containing at least 1 part by weight of flour per part by weight of water, and optionally further additives, and by fermenting at a temperature of 5-45°C until the volume of the dough has increased by at least 10 vol.%, **characterised in that** sufficient sodium chloride is added to the pre-dough that the latter contains at least 10 wt.% of sodium chloride.

2. Method according to claim 1, **characterised in that** the NaCl is added after the fermentation in a second process step.

3. Method according to claim 1 or 2, **characterised in that** at least 15 wt.% of NaCl is added.

4. Method according to any one of the preceding claims, **characterised in that** at least 50 wt.% of the quantity of NaCl required for the finished bakery product is added to the pre-dough.

5. Method according to any one of the preceding claims, **characterised in that** acid-forming microorganisms are added.

6. Method according to any one of the preceding claims, **characterised in that** not more than three parts by weight of flour per part by weight of water are used.

7. Method according to any one of the preceding claims, **characterised in that** at least one fat is added.

8. Method according to any one of the preceding claims, **characterised in that** at least one emulsifying agent is added.

9. Method according to any one of the preceding claims, **characterised in that** polysaccharides and/or proteins are added.

10. Storable, moist, bake-active, kneaded pre-dough containing flour, water and yeast, **characterised in that** the proportion by weight of flour is equal to or greater than the proportion by weight of water and **in that** the dough contains at least 10 wt.% of sodium chloride.

11. Use of a pre-dough obtained according to the method of claims 1 to 9 or of the pre-dough of claim 10 for manufacturing bakery goods.

## Revendications

1. Procédé de préparation d'une pré-pâte humide, de bonne conservation, active à la cuisson, pour produits de boulangerie forts en arômes par malaxage d'un mélange de farine, d'eau et de levure qui contient au moins une partie en poids de farine par partie en poids d'eau, ainsi qu'éventuellement d'autres additifs et par fermentation à une température de 5 à 45 °C, jusqu'à ce que le volume de la pâte augmente d'au moins 10 % en volume, **caractérisé en ce que** l'on ajoute à la pré-pâte suffisamment de chlorure de sodium pour qu'elle contienne au moins 10 % en poids de chlorure de sodium.

2. Procédé selon la revendication 1, **caractérisé en ce que** l'on ajoute le NaCl après la fermentation dans une deuxième étape de procédé.

3. Procédé selon la revendication 1 ou 2, **caractérisé en ce que** l'on ajoute à la pré-pâte au moins 15 % en poids de chlorure de sodium.

4. Procédé selon l'une des revendications précédentes, **caractérisé en ce que** l'on ajoute à la pré-pâte au moins 50 % en poids de la quantité de NaCl qui est nécessaire pour le produit de boulangerie terminé.

5. Procédé selon l'une des revendications précédentes, **caractérisé en ce que** l'on ajoute des micro-organismes acidifiants.

6. Procédé selon l'une des revendications précédentes, **caractérisé en ce que** l'on utilise au maximum trois parties en poids de farine par partie en poids d'eau.

7. Procédé selon l'une des revendications précédentes, **caractérisé en ce que** l'on ajoute au moins une graisse.

8. Procédé selon l'une des revendications précédentes, **caractérisé en ce que** l'on ajoute au moins un agent émulsifiant.

9. Procédé selon l'une des revendications précédentes, **caractérisé en ce que** l'on ajoute des polysaccharides et/ou des protéines.

10. Pré-pâte malaxée, active à la cuisson, humide, de bonne conservation contenant de la farine, de l'eau et de la levure, **caractérisée en ce que** la proportion en poids de farine est égale ou supérieure à la proportion en poids d'eau et **en ce que** la pâte contient au moins 10 % en poids de chlorure de sodium.

11. Utilisation d'une pré-pâte obtenue selon le procédé des revendications 1 à 9 ou de la pré-pâte selon la revendication 10 pour la préparation de produits de boulangerie.
